# DEMANDE DE BREVET EUROPEEN

(11) **EP 1 884 349 A1**
(43) Date de publication de la demande: **06.02.2008**
(21) Numéro de dépôt: 06118199.6
(22) Date de dépôt: 31.07.2006
(51) Int. Cl.: B29C 65/50

(54) **Emballage formé d'un film à plusieurs couches soudé bout à bout**

(71) Demandeur: Aisapack Holding SA, 1896 Vouvry (CH)
(72) Inventeur: Thomasset, Jacques, 1896 Vouvry (CH); Mathieu, Stéphane, 1896 Vouvry (CH)
(74) Mandataire: Grosfillier, Philippe

(57) **Abrégé**

Emballage réalisé à partir d'un film thermoplastique (2) dont les extrémités (5) sont mises bout à bout, ledit film (2) étant composé de plusieurs couches (7,8,9) dont au moins une première couche soudante (8). Le film (2) comporte une seconde couche (7) dont le soudage bout à bout n'est que partiel ou inexistant, et une bande (6) de fine épaisseur solidaire desdites extrémités (5) du film (2). La bande renforce la résistance de l'emballage au niveau de la soudure.

## Description

### Domaine de l'invention

L'invention se situe dans le domaine des emballages formés au moyen de films plastiques. Elle concerne plus précisément un emballage dont les extrémités sont soudées bout à bout.

L'invention concerne également un procédé de fabrication d'un emballage réalisé à partir d'un film thermoplastique et dont les extrémités sont soudées bout à bout.

### Etat de la technique

Les emballages confectionnés à partir de films contenant au moins une couche de plastique, formant par exemple des sachets, des tubes ou encore des briques sont connus dans l'état de la technique. Ces emballages sont notamment confectionnés par soudage des extrémités du film.

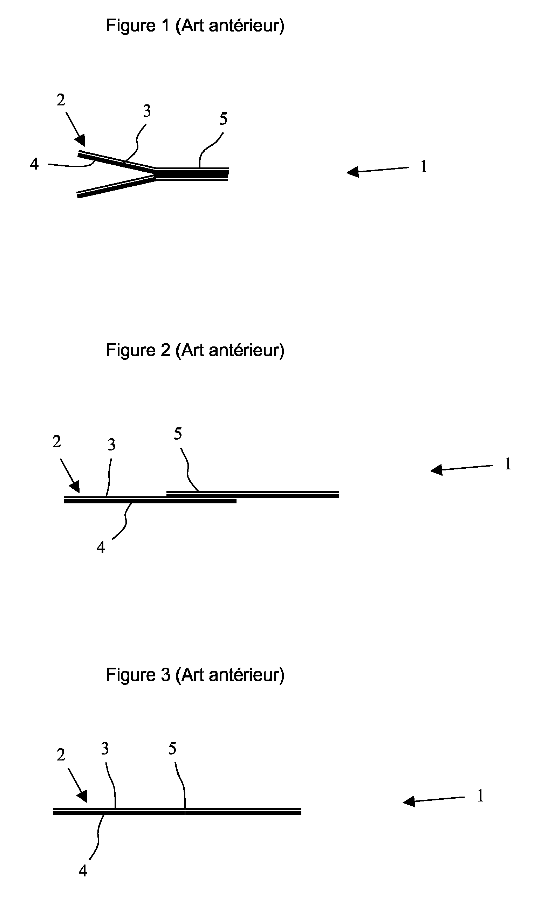

Une première méthode de soudage consiste à réaliser un assemblage dit « chair - chair » dans laquelle on soude la face inférieure du film sur elle-même. Cet assemblage est illustré à la figure 1.

Une deuxième méthode de soudage consiste à réaliser un assemblage dit « chair - cuir » dans lequel on forme un recouvrement des extrémités du film et on soude la face inférieure sur la face supérieure dudit film. Cet assemblage est illustré à la figure 2.

Une troisième méthode d'assemblage dite "bout à bout" consiste à souder les extrémités du film sans les chevaucher. Cette méthode illustrée en figure 3 est décrite dans les brevets WO2005095105A1 et US5569144 et US4733800.

A titre d'exemple, le brevet US4733800 décrit la réalisation d'un tube flexible fabriqué à partir d'un film plastique multicouche et ayant des propriétés de non retour élastique ; propriété caractéristique des tubes flexibles en aluminium. Ce brevet propose l'utilisation d'une bande soudée à l'intérieur ou à l'extérieur du tube et reliant les extrémités soudées, ladite bande contenant une feuille métallique apportant les propriétés de non retour. Le brevet susmentionné précise que l'épaisseur de la feuille métallique dans la bande est supérieure à l'épaisseur de la feuille métallique dans le film multicouche. Un inconvénient majeur de ce brevet est lié à la difficulté de fermer les extrémités du corps tubulaire confectionné. Pour fabriquer un tube pour produits pâteux (dentifrice par exemple) il est courant de souder une tête de tube moulée par injection sur l'extrémité du corps tubulaire. Le soudage d'une tête de tube sur un corps tubulaire obtenu selon l'enseignement de ce brevet US4733800 est particulièrement difficile à réaliser. Les extrémités de la bande soudée créent une discontinuité de la surface interne du corps tubulaire par conséquent occasionnent un risque de fuite. Il est également suggéré dans ce brevet de souder ladite bande à l'extérieur du tube. Cependant, cette bande de forte épaisseur contenant une couche d'aluminium nuit grandement à l'esthétique de l'emballage.

Le brevet US5569144 décrit un dispositif de soudage bout à bout des extrémités du film. Le tube obtenu présente des propriétés esthétiques améliorées, avec une zone de soudure quasiment invisible. Cependant la faible résistance du tube au niveau de la zone soudée rend l'utilisation de ces tubes sur le marché très risquée.

La demande de brevet international WO2005095105 décrit une méthode pour améliorer le soudage bout à bout d'un film multicouche comportant une couche non soudante. Cette méthode consiste à utiliser un laminé comportant des films soudants au niveau des faces inférieure et supérieure ; la couche non soudante emprisonnée entre les films soudants se trouvant en retrait au niveau des extrémités du film ; de sorte que lors du soudage bout à bout les couches soudantes enveloppent la couche non soudante au niveau de son extrémité et permettent un soudage du film sur toute son épaisseur. Cette méthode permet l'amélioration du soudage bout à bout de films multicouches, cependant les tubes multicouches réalisés selon la méthode proposée dans la demande WO2005095105 présentent une résistance au niveau de la soudure inférieure à la résistance du film.

La principale difficulté du soudage bout à bout est l'obtention d'une zone soudée dont la résistance est proche de la résistance du film. On cherche en particulier à pallier au mode de rupture fragile qui est observé au niveau de la soudure bout à bout lorsque la soudure est sollicitée en traction

L'invention permet de réaliser des emballages soudés bout à bout à partir d'un film multicouche comportant au moins une couche non soudante ; les emballages obtenus selon l'invention présentant une résistance de la zone soudée au moins égale à la résistance du film, et des propriétés esthétiques améliorées.

### Exposé général de l'invention

L'invention porte sur le soudage bout à bout d'un film composé de plusieurs couches dont au moins une couche fonctionnelle et une couche soudante, ladite couche fonctionnelle étant au mieux partiellement soudée. On ajoute une bande qui relie les extrémités du film afin de compenser la perte de résistance au niveau de la zone soudée ; la perte de résistance étant lié au fait que les extrémités de ladite couche fonctionnelle sont au mieux partiellement soudées ou que la couche soudante a des propriétés amoindries au niveau de la soudure.

Les différents aspects de l'invention seront mieux compris à l'aide des figures suivanteset de leur description détaillée:
Les figures 1 à 3 décrivent les principales méthodes décrites dans l'art antérieur pour relier les extrémités d'un film.
La figure 1 illustre le soudage dit chair-chair qui consiste à assembler les extrémités 5 dudit film 2 sur sa face inférieure 4, ladite face inférieure étant située à l'intérieur de l'emballage.
La figure 2 illustre le mode de soudage dit chair-cuir ou avec recouvrement qui consiste à souder les extrémités 5 du film 2 ; la face supérieure 3 du film 2 étant assemblée sur la face inférieure 4 du film 2 ; lesdites faces inférieure et supérieure étant situées respectivement à l'intérieur et à l'extérieur de l'emballage.
La figure 3 illustre le mode de soudage dit bout à bout des extrémités 5 du film 2.
Les figures 4 à 10 illustrent des assemblages soudés bout à bout selon le concept inventif.

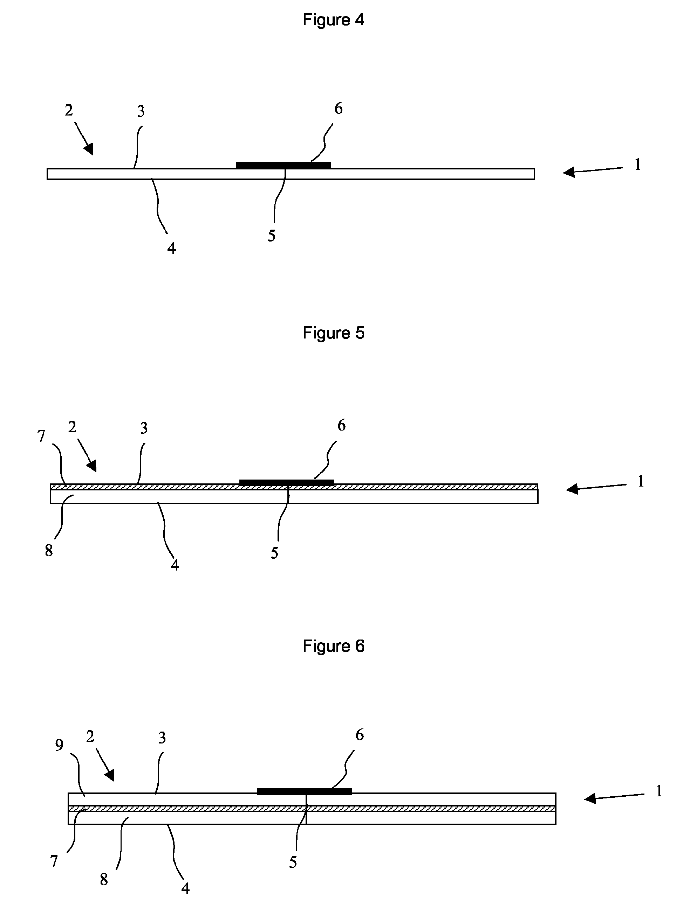

La figure 4 montre le concept général de l'invention qui consiste en un assemblage 1 des extrémités 5 d'un film 2, lesdites extrémités 5 étant soudées bout à bout mais ledit soudage n'étant que partiel, les extrémités partiellement soudées étant reliées par une bande 6 de fine épaisseur qui renforce la zone soudée.
La figure 5 illustre un mode préférentiel de l'invention consistant en un assemblage 1 des extrémités 5 du film 2 ; le film 2 étant formé d'au moins une couche soudante 8 et une couche fonctionnelle 7, lesdites extrémités 5 étant soudées bout à bout uniquement au niveau de la couche soudante 8 ; une bande 6 de faible épaisseur étant collée sur la face supérieures 3 du film 2 et reliant les extrémités non soudées de la couche 7.
La figure 6 illustre un autre exemple d'assemblage 1 bout à bout des extrémités 5 d'un film 2, ledit film 2 comportant une couche fonctionnelle 7 emprisonnée entre deux couches soudantes 8 et 9, et une bande 6 reliant les extrémités 5 partiellement soudées.

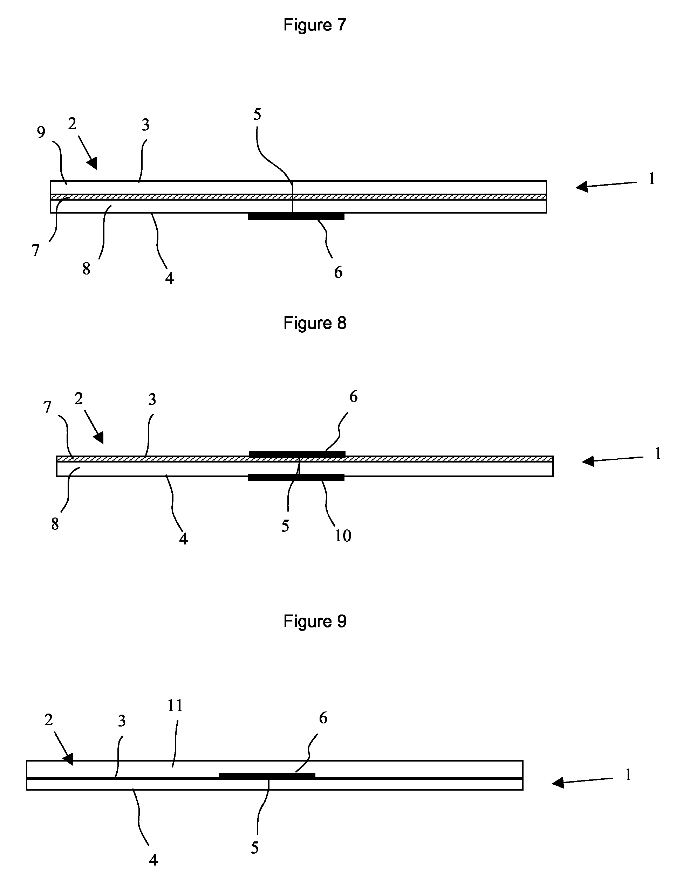

La figure 7 montre que ladite bande 6 peut être ajoutée sur la face inférieure 4 du film 2.
La figure 8 illustre l'assemblage d'un film 2 partiellement soudé bout à bout au niveau de ses extrémités 5, une bande 6 étant ajoutée sur la face supérieure 3 de l'assemblage formant la surface externe de l'emballage ; une deuxième bande 10 étant ajoutée sur la face inférieure 4 de l'emballage et formant la surface interne de l'emballage ; lesdites bandes 6 et 10 reliant les extrémités 5 partiellement soudées.
La figure 9 illustre le fait qu'une couche de revêtement 11 peut être rajoutée sur la surface externe 3, afin de couvrir toute la surface du film 2 et de la bande 6. La couche de revêtement 11 forme la surface externe de l'emballage, la bande 6 se trouve emprisonnée dans la structure multicouche.

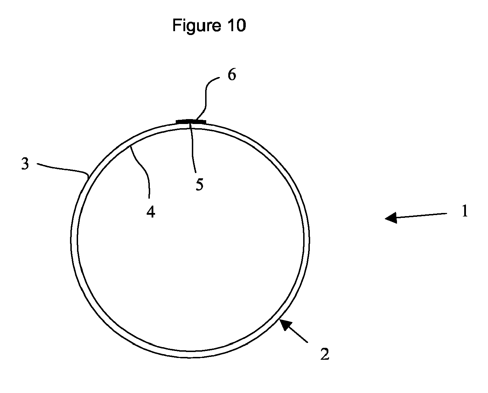

La figure 10 illustre la réalisation d'un corps tubulaire selon le mode préférentiel de l'invention.

### Exposé détaillé de l'invention

Définition des termes utilisés dans l'exposé de l'invention :
- Soudage : opération consistant à assembler en faisant fondre deux matériaux de même nature ou miscibles à l'état fondu, ladite miscibilité se manifestant par la diffusion et l'interpénétration des chaînes moléculaires ; puis en faisant refroidir lesdits matériaux afin de figer l'état d'interpénétration moléculaire.
- Collage : opération d'assemblage de deux matériaux n'étant pas de même nature ou immiscible à l'état fondu. Le collage peut faire intervenir des mécanismes chimiques (réaction des bouts de chaîne, réticulation), des mécanismes physiques (forces de Van des Waals, évaporation). Le collage est une opération d'assemblage pouvant être réalisée à température ambiante ou en chauffant les matériaux.
- Couche soudante : couche dont la principale caractéristique est de permettre et faciliter la confection de l'emballage par soudage.
- Couche fonctionnelle : couche dont la principale caractéristique est l'apport de propriétés autres que la faculté de se souder. Les couches fonctionnelles généralement de fine épaisseur sont utilisées par exemple pour améliorer l'apparence de l'emballage (couches imprimées, couches transparentes), pour améliorer la résistance de l'emballage (couches bi - orientées, couches techniques), pour apporter des propriétés barrière (oxygène, arômes) ou pour apporter de la fonctionnalité (déchirure facile pour ouverture de l'emballage).

Les couches soudantes sont généralement à base de polyoléfines (polyéthylène, polypropylène). Le soudage bout à bout met en contact une très faible quantité de matière, ce qui rend plus difficile l'obtention d'un assemblage résistant. Il a été observé qu'une couche soudante composée d'un mélange de 80% de polyéthylène basse densité linéaire et de 20% de polyéthylène basse densité radicalaire permettait d'obtenir une soudure résistante.

Les couches fonctionnelles sont à base d'une grande diversité de résine dont le choix dépend des propriétés recherchées (par exemple : PET, PA, PS, EVOH, PVDC). Les principales couches fonctionnelles utilisées aujourd'hui sont les couches mono ou bi-orientées (PP, PET, PA, PS) ; les films avec des propriétés barrière (PET avec dépôt d'un coating SiOx, PVDC, EVOH, PA). Une couche fonctionnelle peut aussi être en aluminium ou en papier.

La figure 4 illustre le concept général de l'invention. Un film 2 comportant au moins une couche soudante et une couche fonctionnelle est soudé bout à bout au niveau de ses extrémités 5. Une bande 6 est soudée ou collée sur une face de l'assemblage et relie les extrémités 5, partiellement soudées. La bande 6 peut être imprimée ou transparente ; elle peut être collée ou soudée sur la surface du film ; elle peut contenir une couche barrière afin de compenser une éventuelle discontinuité de la couche barrière au niveau de la zone soudée. L'épaisseur de ladite bande est petite devant l'épaisseur du film. L'épaisseur de ladite bande est préférentiellement comprise entre 10 et 60 microns. Ladite bande peut être appliquée avant soudage ou après soudage bout à bout du film.

L'invention est particulièrement avantageuse car elle permet de réaliser des emballages en soudant bout à bout des films qui associent des couches soudantes et des couches fonctionnelles.

L'invention permet d'assembler bout à bout les extrémités d'un film dont les extrémités se soudent partiellement.

L'invention permet d'obtenir des emballages soudés avec une variation d'épaisseur négligeable au niveau de la zone soudée et ayant une résistance de la zone soudée équivalente à la résistance du film. Les emballages obtenus peuvent être imprimés sur toute leur surface sans rupture de l'impression dans la zone soudée

La figure 5 illustre un mode préférentiel de l'invention. Ce mode préférentiel consiste en l'assemblage 1 des extrémités 5 d'un film 2 comportant au moins une couche soudante 8 en surface inférieure 4 et une couche fonctionnelle 7 en surface supérieure 3 ; ladite face supérieure 3 formant la surface externe de l'emballage et ladite surface inférieure 4 formant la surface interne de l'emballage. Le soudage bout à bout des extrémités 5 conduit à un assemblage partiel des extrémités du film 2, la couche fonctionnelle 7 ne se soudant pas bout à bout. Une bande 6 est collée ou soudée sur la surface supérieure 3 du film afin de relier les extrémités non soudées de ladite couche et renforcer l'assemblage. La bande 6 est souvent collée sur la couche fonctionnelle 3, le soudage d'une bande sur la surface 3 de ladite couche fonctionnelle n'étant généralement pas possible. Ladite bande 6 peut être imprimée ou transparente, elle peut contenir une couche barrière afin de compenser une éventuelle discontinuité de la couche barrière au niveau de la zone soudée. L'épaisseur de la bande 6 est petite devant l'épaisseur du film 2. L'épaisseur de la bande est préférentiellement comprise entre 10 et 60 microns. La bande peut être appliquée avant soudage ou après soudage bout à bout du laminé. La couche soudante 8 formant la surface interne 4 de l'emballage garantit les propriétés hygiéniques à l'intérieur de l'emballage et au niveau de l'assemblage.

L'emballage confectionné selon le mode préférentiel de l'invention illustré à la figure 5 est particulièrement avantageux et innovant. Ce mode préférentiel de l'invention permet de confectionner des emballages par soudage bout à bout de films comportant seulement deux couches, une première couche étant soudante et une deuxième couche étant fonctionnelle. L'emballage confectionné selon ce mode peut être imprimé sur toute la surface de l'emballage sans discontinuité au niveau de la zone soudée. La bande 6 est de préférence transparente et de faible épaisseur afin de ne pas modifier l'aspect de l'emballage. La bande 6 peut également être imprimée.

Le mode préférentiel illustré à la figure 5 est avantageux pour relier bout à bout des films comprenant des couches dont la différence de température de fusion est supérieure à 20°C. L'assemblage de ces films selon le mode préférentiel consiste à chauffer ledit film à une température proche de la température de fusion de la couche soudante, et à relier les extrémités dudit film par l'intermédiaire d'une bande collée ou soudée.

La figure 6 illustre le cas où la couche fonctionnelle 7 est emprisonnée entre deux couches soudantes 8 et 9. Une bande 6 est soudée ou collée sur la face supérieure 3 ou inférieure 4 du film 2 et relie les extrémités 5 soudées bout à bout. La bande 6 renforce la zone soudée, et peut améliorer les propriétés barrières au niveau de la zone soudée. Une bande 6 multicouche peut être avantageuse pour permettre le soudage sur le film 2 et apporter des propriétés barrière ou de renfort.

La figure 7 illustre un autre exemple de l'invention où la bande 6 est soudée ou collée sur la face interne de l'emballage, c'est-à-dire sur la face inférieure 4 du film 2. La couche fonctionnelle 7 est emprisonnée entre deux couches soudantes 8 et 9. La bande 6 est préférentiellement soudée sur la face inférieure 4 de la couche soudante 8. L'assemblage illustré à la figure 7 est avantageux quand la couche soudante 8 ne garantit pas des propriétés hygiéniques suffisantes au niveau des extrémités soudées 5. Il a été observé par exemple que si l'épaisseur de la couche soudante 8 est inférieure à 100 microns, il est difficile de garantir le soudage bout à bout sans discontinuité de la couche 8 au niveau de la zone soudée. Pour une épaisseur de la couche 8 inférieure à 100 microns, il arrive que l'extrémité de la couche fonctionnelle 7 se trouve en contact avec l'intérieur de l'emballage, ce qui nuit à la résistance de la zone soudée et aux propriétés hygiéniques de l'emballage. Le soudage de la bande 6 à l'intérieur de l'emballage permet de remédier au problème précité. Généralement la bande 6 soudée à l'intérieur de l'emballage est de même nature que la couche 8 formant la couche interne de l'emballage.

La figure 8 illustre le cas ou une première bande 6 est ajoutée sur la face externe de l'emballage et une deuxième bande 10 est ajoutée sur la face interne de l'emballage. L'assemblage présenté à la figure 8 est avantageux lorsque l'épaisseur de la couche soudante 8 est faible. La bande 6 est généralement collée sur la face supérieure 3 de la couche fonctionnelle 7, tandis que la bande 10 est avantageusement soudée sur la face inférieure 4 de la couche 8 formant la surface interne de l'emballage.

Une variante de l'invention illustrée à la figure 9 consiste à déposer une couche de résine synthétique 11 qui couvre la surface externe du film 2 ; ladite couche de résine synthétique 11 couvrant toute la surface 3 du film 2 ainsi que la surface de la bande 6, de sorte que la bande 6 se trouve emprisonnée à l'intérieur de l'assemblage 1. L'assemblage illustré à la figure 9 est particulièrement avantageux pour confectionner des corps tubulaires dont la zone de soudure est totalement invisible, et ayant une grande résistance de la zone soudée. La couche de revêtement 16 est préférentiellement extrudée sur la surface du film 2 et ladite couche est choisie pour adhérer sur la surface du film 2 et de la bande 6. Le revêtement 11 peut contenir plusieurs couches pour améliorer l'adhésion sur le film 2, pour améliorer les propriétés barrières ou les propriétés de surface de l'emballage.

La figure 10 illustre la confection d'un corps tubulaire par soudage bout à bout d'un film selon le mode préférentiel de l'invention. Ce corps tubulaire est particulièrement avantageux car il peut être confectionné avec un film comportant seulement deux couches, une première couche étant soudante et une deuxième couche étant fonctionnelle. Ce film ne peut être utilisés pour réaliser un corps tubulaire selon l'état de l'art car le soudage de la face supérieure sur la face inférieure dudit film n'est pas possible. L'invention permet de réaliser des emballages plus résistant, plus esthétique, et permet d'utiliser une plus grande variété de films multicouches.

Le soudage bout à bout de films tel que décrit précédemment est particulièrement avantageux parce qu'il permet de confectionner des emballages ayant des propriétés esthétiques améliorées ; l'amélioration de l'esthétique de l'emballage étant liée au fait que la zone de soudure est peu visible et que la paroi de l'emballage présente une sur - épaisseur négligeable au niveau de la zone soudée.

L'invention ne se limite pas aux exemples illustrés par les figures 4 à 10. Des corps tubulaires peuvent être réalisés selon les méthodes présentées dans les figures 4 à 9. D'autres méthodes résultant de la combinaison des méthodes illustrées par les figures 4 à 9 font partie également de l'invention de même que l'utilisation d'équivalents.

L'invention permet de réaliser des emballages économiques, de faible épaisseur et de grande résistance. L'invention peut être utilisée pour l'assemblage de films plastiques multicouches mais également pour des films comprenant des couches aluminium, des couches de papier ou de carton.

L'épaisseur de la bande est faible devant l'épaisseur des films. En général l'épaisseur de la bande est 5 à 10 fois plus faible que l'épaisseur du film. L'épaisseur de ladite bande est préférentiellement comprise entre 10 et 60 microns. La bande peut être imprimée ou transparente ; elle peut être collée ou soudée sur la surface du laminée ; elle peut contenir une couche barrière afin d'améliorer les propriétés barrière de l'assemblage. La bande peut être appliquée avant soudage ou après soudage bout à bout du laminé. La bande peut être une bande adhésive dont l'application se fait à température ambiante, la bande peut être collée par ajout de colle à l'interface entre le film et ladite bande, la bande peut être collée en chauffant ladite bande, la bande peut être soudée. La force d'adhésion de la bande sur la surface du film est un facteur déterminant de la résistance de l'assemblage. Une force d'adhésion trop faible conduit à des risques de rupture de l'assemblage lorsque l'emballage est sollicité en pression, en traction, au pliage, en choc, ou en fatigue. Aussi, il est souhaité d'obtenir une forte adhésion entre la bande et le film de sorte que ladite bande ne puisse être séparé dudit film.

La bande peut être soudée ou collée sur la surface du film. En surface supérieure de l'assemblage formant la surface externe de l'emballage, il est souvent favorable de coller la bande sur le film. De nombreuses colles et méthodes de collages peuvent être envisagées. A titre d'exemple une première méthode consiste à rapporter une bande sur laquelle la colle a été préalablement appliquée. Une première variante de cette méthode est la bande adhésive applicable à température ambiante, une seconde variante est une bande adhésive que l'on colle en chauffant. L'utilisation d'une bande adhésive conduit à un procédé facile à maîtriser et facilement industrialisable. Une autre méthode consiste à appliquer la colle sur la bande ou sur le film au moment de l'assemblage. L'utilisation de colles réactives à deux composants permet d'obtenir de forts niveaux d'adhésion. Généralement l'opération de collage ne nécessite pas de traitement particulier de la surface de la zone assemblée, cependant il est possible de faire des traitements de surface avant collage (traitement corona par exemple).

L'invention est particulièrement avantageuse pour confectionner des tubes flexibles pour produits cosmétiques, pharmaceutiques ou alimentaires.

### Exemples

Dans les exemples qui suivent, les structures multicouches sont décrites depuis la face externe vers la face interne de l'emballage, c'est-à-dire depuis la face supérieure vers la face inférieure de l'assemblage. Pour simplifier la compréhension de l'invention, les couches adhésives qui lient les couches soudantes et fonctionnelles du film 2 ne sont pas indiquées. Seule la couche de colle qui assure la cohésion entre la bande 6 ou 10 et le film 2 est précisée.

### Exemple 1

Assemblage réalisé selon le mode préférentiel de l'invention illustré à la figure 5

| | |
|---|---|
| ○ Assemblage 1 : | PET / colle - PET / PE |
| ○ Film 2 : | PET / PE |
| ○ Couche fonctionnelle 7 : | PET épaisseur 30 microns |
| ○ Couche soudante 8 : | PE épaisseur 180 microns |
| ○ Bande 6 : | PET / colle épaisseur 40 microns |
| ○ Colle | Bostik Vitel 1912 |

### Exemple 2

Assemblage réalisé selon le mode préférentiel de l'invention illustré à la figure 5

| | |
|---|---|
| ○ Assemblage 1 : | BOPP / colle - BOPP / EVOH / PE |
| ○ Film 2 : | BOPP / EVOH / PE |
| ○ Couche fonctionnelle 7 : | BOPP /EVOH épaisseur 40 microns |
| ○ Couche soudante 8 : | PE épaisseur 200 microns |
| ○ Bande 6 : | PET / colle épaisseur 60 microns |
| ○ Colle | Bostik TLH 2013 |

### Exemple 3

Assemblage réalisé selon le mode illustré à la figure 6

| | |
|---|---|
| ○ Assemblage 1 : | PA / PE - PE / PA / PE |
| ○ Film 2 : | PE / PA / PE |
| ○ Couche fonctionnelle 7 : | PA épaisseur 40 microns |
| ○ Couche soudante 8 : | PE épaisseur 200 microns |
| ○ Bande 6 : | PA / PE épaisseur 60 microns |

### Exemple 4

Assemblage réalisé selon le mode illustré à la figure 7

| | |
|---|---|
| ○ Assemblage 1 : | PE / Aluminium /PE - PE |
| ○ Film 2 : | PE / Aluminium / PE |
| ○ Couche fonctionnelle 7 : | Aluminium épaisseur 8 microns |
| ○ Couche soudante 8 : | PE épaisseur 80 microns |
| ○ Couche soudante 9 : | PE épaisseur 120 microns |
| ○ Bande 6 | PE épaisseur 60 microns |

### Exemple 5

Assemblage réalisé selon le mode illustré à la figure 8

| | |
|---|---|
| Assemblage 1 : | PET / colle - carton / Aluminium / PE - PE |
| ○ Film 2 : | Carton / Aluminium / PE |
| ○ Couche fonctionnelle 7 : | Carton / aluminium |
| ○ Couche soudante 8 : | PE épaisseur 40 microns |
| ○ Bande 6 | PET / colle épaisseur 60 microns |
| ○ Colle | Bostik TEE 222 |
| ○ Bande 10 | PE épaisseur 40 microns |

## Revendications

1. Emballage réalisé à partir d'un film thermoplastique dont les extrémités sont mises bout à bout, ledit film étant composé de plusieurs couches dont au moins une première couche soudante ; emballage **caractérisé en ce qu'**il comporte une seconde couche du film dont le soudage bout à bout n'est que partiel ou inexistant, et au moins une bande de fine épaisseur solidaire desdites extrémités du film ; ladite bande renforçant la résistance de l'emballage au niveau de la soudure.

2. Emballage selon la revendication 1 dans lequel ladite bande est solidaire des extrémités de ladite seconde couche.

3. Emballage selon la revendication 1 comprenant deux bandes solidaires des extrémités du film et placées de chaque côté du film.

4. Emballage selon l'une quelconque des revendications précédentes dans lequel la ou les seconde(s) couche(s) est (sont) bi-orientée(s).

5. Emballage selon l'une des revendications 1 à 4 dans lequel la différence de température de fusion entre ladite première et ou les seconde(s) couche(s) est supérieure à 20°C.

6. Emballage selon l'une quelconque des revendications précédentes dans lequel la ou les bande(s) est (sont) collée(s).

7. Emballage selon l'une quelconque des revendications précédentes dans lequel la ou les bande(s) comprend (comprennent) une couche bi-orientée.

8. Emballage selon l'une quelconque des revendications précédentes dans lequel la ou les bande(s) comprend (comprennent) une couche barrière.

9. Emballage selon l'une quelconque des revendications précédentes dans lequel l'épaisseur de la ou des bande(s) est comprise entre 10 et 80 microns.

10. Emballage selon l'une quelconque des revendications précédentes dans lequel ladite bande est emprisonnée entre plusieurs couches.

11. Procédé de réalisation d'un emballage tel que défini dans l'une quelconque des revendications précédentes consistant à souder bout à bout les extrémités d'un film composé de plusieurs couches, ledit film comportant au moins une première couche soudante et une seconde couche au mieux partiellement soudante ; procédé **caractérisé par le fait que** les extrémités du film sont mises bout à bout, que les extrémités dudit film sont successivement chauffées et refroidies afin de souder les extrémités de ladite première couche et **par le fait qu'**au moins une bande est rendue solidaire desdites extrémités afin de renforcer la résistance se l'emballage au niveau de la soudure.

12. Procédé selon la revendication 11 dans lequel ladite bande est rendue solidaire de la seconde couche.

13. Procédé selon la revendication 11 dans lequel deux bandes sont rendues solidaires desdites extrémités, chaque bande étant placée d'un côté du film.

14. Procédé selon la revendication 11, 12 ou 13 **caractérisé par le fait que** la ou les bande(s) est (sont) rendue(s) solidaire(s) de la seconde couche préalablement auxdites opérations de chauffage et refroidissement.

15. Procédé selon la revendication 11, 12 ou 13 **caractérisé par le fait que** la ou les bande(s) est (sont) rendue(s) solidaire(s) de la seconde couche postérieurement auxdites opérations de chauffage et refroidissement.

16. Procédé selon l'une quelconque des revendications 11 à 15 dans lequel on chauffe le film à une température permettant de faire fondre les extrémités de ladite première couche, tandis que les extrémités de ladite seconde couche restent à l'état solide ; ladite température de chauffage étant généralement supérieure à la température de fusion de ladite première couche et inférieure à la température de fusion de ladite seconde couche.

17. Procédé selon l'une quelconque des revendications 11 à 16 dans lequel on dépose au moins une couche de résine synthétique qui couvre la surface de l'assemblage formé dudit film et de ladite bande ou desdites bandes.
